(19) Europäisches Patentamt

European Patent Office

Office européen des brevets

(11) **EP 0 886 079 A2**

(12) **EUROPÄISCHE PATENTANMELDUNG**

(43) Veröffentlichungstag:
23.12.1998 Patentblatt 1998/52

(51) Int. Cl.⁶: **F16F 7/10**, F16F 15/00

(21) Anmeldenummer: 98110616.4

(22) Anmeldetag: **10.06.1998**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **18.06.1997 DE 19725770**

(71) Anmelder:
• **Deutsches Zentrum für Luft- und Raumfahrt e.V.
53127 Bonn (DE)**

• **Eras Entwicklung und Realisation adaptiver
Systeme GmbH
37085 Göttingen (DE)**

(72) Erfinder:
• **Breitbach, Elmar, Prof. Dr.
37075 Göttingen (DE)**
• **Breitbach, Harald, Dipl.-Ing.
37085 Göttingen (DE)**

(74) Vertreter:
**Patentanwälte Rehberg + Hüppe
Am Kirschberge 22
37085 Göttingen (DE)**

(54) **Verfahren und Vorrichtung zur Dämpfung von Schwingungen mit einem Schwingungstilger**

(57) Zur Dämpfung von Schwingungen eines elastischen Systems mit einem Schwingungstilger wird eine Masse (6) des Schwingungstilgers (5) unter Zwischenordnung eines ansteuerbaren und in einer Arbeitsrichtung des Schwingungstilgers (5) längenveränderlichen Aktuators (8) elastisch an das elastische System angekoppelt. Eine Tilgereigenfrequenz des Schwingungstilgers (5) wird auf eine Eigenfrequenz des elastischen Systems (1) abgestimmt, und der Aktuator (8) wird zur Dämpfung von Schwingungen des elastischen Systems (1) aktiv angesteuert, wodurch der Bereich der passiven Schwingungsdämpfung durch den Aktuator (8) verbreitert wird.

Fig. 2

EP 0 886 079 A2

## Beschreibung

Die Erfindung bezieht sich auf ein Verfahren zur Dämpfung von Schwingungen eines elastischen Systems mit einem Schwingungstilger, wobei eine Nasse des Schwingungstilgers unter Zwischenordnung eines ansteuerbaren und in einer Arbeitsrichtung des Schwingungstilgers längenveränderlichen Aktuators elastisch an das elastische System angekoppelt wird, wobei eine Tilgereigenfrequenz des Schwingungstilgers unter Berücksichtigung einer Eigenfrequenz des elastischen Systems festgelegt wird und wobei der Aktuator zur Dampfung von Schwingungen des elastischen Systems aktiv angesteuert wird. Weiterhin bezieht sich die Erfindung auf eine Vorrichtung zur Dämpfung von Schwingungen eines elastischen Systems, mit einem Schwingungstilger, der eine Masse aufweist, die ihrerseits über einen ansteuerbaren und in einer Arbeitsrichtung des Schwingungstilgers längenveränderlichen Aktuator elastisch an das elastische System angekoppelt ist, wobei eine Tilgereigenfrequenz des Schwingungstilgers unter Berücksichtigung einer Eigenfrequenz des elastischen Systems festgelegt ist und wobei eine Steuereinrichtung zur Ansteuerung des Aktuators vorgesehen ist.

Die Dämpfung von Schwingungen eines elastischen Systems mit Schwingungstilgern, die auch kurz als Tilger bezeichnet werden, ist allgemein bekannt. Die Funktion eines Schwingungstilgers beruht darauf, daß er durch das elastische System seinerseits zu Schwingungen angeregt wird und dadurch dem elastischen System Schwingungsenergie entzieht. Voraussetzung hierfür ist, daß die Tilgereigenfrequenz genauso groß ist, wie die Frequenz einer angeregten Eigenfrequenz des elastischen Systems. Oberhalb und unterhalb der Tilgereigenfrequenz treten jedoch Eigenfrequenzen des Gesamtsystems aus dem elastischen System und dem Schwingungstilger auf. Im Ergebnis ist ein Schwingungstilger nur zur Dämpfung von Schwingungen in einem ganz bestimmten Frequenzbereich geeignet. Wenn beispielsweise durch das Hochfahren eines Triebwerks diese Frequenz von unten her erreicht wird, wird in jedem Fall die unterhalb der Tilgereigenfrequenz liegende Eigenfrequenz des Gesamtsystems vorübergehend angeregt.

Aus der japanischen Offenlegungsschrift Nr. H 2-225839 sind ein Verfahren und eine Vorrichtung zur Dämpfung von Schwingungen mit einem Schwingungstilger der eingangs beschriebenen Art bekannt. Dabei wird der Frequenzbereich um die Tilgereigenfrequenz des Schwingungstilgers nicht genutzt. Genutzt wird der Schwingungstilger vielmehr in einem Frequenzbereich deutlich unterhalb der Tilgereigenfrequenz, in dem die Übertragungsfunktion des Schwingungstilgers einen parabelförmigen Verlauf aufweist, oder alternativ in einem weit oberhalb der Tilgereigenfrequenz liegenden Frequenzbereich, in dem die Übertragungsfunktion des Schwingungstilgers einen konstanten Wert annimmt. In beiden Bereichen ist eine besonders einfache Phasenbeziehung zwischen den Kräften auf den Tilger und den daraus resultierenden Schwingungen des Tilgers bzw. zwischen den mit dem Aktuator erzeugten Schwingungen des Tilgers und den resultierenden Kompensationskräften auf das elastische System gegeben. Das bedeutet, daß die Ansteuerung des Aktuators bezüglich Phase und Ampflitude sehr einfach ist. Der parabelförmige Bereich der Übertragungsfunktion des Tilgers ist beispielsweise zur gezielten Dämpfung von Kurbelwellenschwingungen bei einem Verbrennungsmotor geeignet, weil dieser eine entsprechende Frequenz-Amplituden-Beziehung aufweist. Demgegenüber ist der konstante Bereich der Übertragungsfunktion des Schwingungstilgers beispielsweise passend für die gezielte Dämpfung der zweiten Motorharmonischen bei einem Vierzylinderverbrennungsmotor. Allerdings muß die Schwingungsdämpfung in beiden Fällen durch einen sehr großen Energieaufwand erkauft werden. In keinem der beiden Frequenzbereiche weist der Tilger eine passive Dämpfungswirkung für Schwingungen des elastischen Systems auf.

Der Erfindung liegt die Aufgabe zugrunde, ein Verfahren und eine Vorrichtung der eingangs beschriebenen Art aufzuzeigen, bei denen ein besonders guter Wirkungsgrad der für die aktive Ansteuerung des Aktuators eingesetzten Energie gegeben ist.

Erfindungsgemäß wird diese Aufgabe bei dem Verfahren der eingangs beschriebenen Art dadurch gelöst, daß die Tilgereigenfrequenz des Schwingungstilgers auf die Eigenfrequenz des elastischen Systems abgestimmt wird und daß durch die aktive Ansteuerung des Aktuators der Bereich der passiven Schwingungsdämpfung durch den Aktuator verbreitert wird.

Bei der Vorrichtung der eingangs beschriebenen Art wird die Aufgabe der Erfindung entsprechend dadurch gelöst, daß die Tilgereigenfrequenz des Schwingungstilgers mit einer Eigenfrequenz des elastischen Systems zusammenfällt.

Mit dem Aktuator können Kräfte zwischen dem elastischen System und dem Schwingungstilger zusätzlich zu den dort wirkenden Reaktionskräften hervorgerufen werden. Damit ist es möglich, den Schwingungstilger auch bei Frequenzen, die nicht direkt mit der Tilgereigenfrequenz zusammenfallen, wirksam anzuregen, und auf diese Weise dem elastischen System Schwingungsenergie dieser Frequenzen zu entziehen. Durch die Ansteuerung des Aktuators ist demnach die schlechtere Energieübertragung von dem elastischen System auf den Schwingungstilger außerhalb der Eigenfrequenz kompensierbar.

Die Erweiterung des wirksamen Frequenzbereichs des Schwingungstilgers wird durch einen Energieaufwand für den Betrieb des Aktuators erkauft. Daher ist es wichtig, daß die Tilgereigenfrequenz mit einer Eigenfrequenz des elastischen Systems zusammenfällt. So weist der Schwingungstilger bei dieser Eigenfrequenz des elastischen Systems gute passive schwingungsdämpfende Eigenschaften auf, für die kein externer Energieaufwand zu betreiben ist.

Für die Ansteuerung des Aktuators ist eine Steuereinrichtung vorgesehen. Diese Steuereinrichtung kann einen Aufbau mit unterschiedlicher Komplexität aufweisen. In der Regel wird aber an dem elastischen System ein Schwingungssensor angeordnet sein, dessen Ausgangssignal ein Eingangssignal der Steuereinrichtung bildet.

In der einfachsten Form ist die Steuereinrichtung zur Ansteuerung des Aktuators mit einer einzigen bestimmten Frequenz ausgebildet. In diesem Fall reicht es aus, wenn das Ausgangssignal des Schwingungssensors an dem elastischen System anzeigt, ob das elastische System eine Anregung mit der bestimmten Frequenz erfährt. Diese Maßnahmen sind ausreichend, um beispielsweise die Auswirkungen der beim Hochfahren eines Triebwerks bis zur Tilgereigenfrequenz überstrichenen ersten Eigenfrequenz des Gesamtsystems bestehend aus dem elastischen System und dem Schwingungstilger zu reduzieren. Das heißt, wenn das Gesamtsystem mit einer Anregung mit der ersten Eigenfrequenz des Gesamtsystem angeregt wird, steuert die Steuereinrichtung den Aktuator zeitweilig mit dieser Eigenfrequenz an, um dem elastischen System Schwingungsenergie zugunsten der Tilgerwirkung zu entziehen. Sobald der Frequenzbereich der Eigenfrequenz des Gesamtsystems durchlaufen ist und das Triebwerk die Tilgereigenfrequenz erreicht hat, stellt die Steuereinrichtung das Ansteuern des Aktuators ein, um keinen unnötigen Energieverbrauch während der normalen Funktion des Triebwerks zu verursachen.

Die Steuereinrichtung kann aber auch zur Ansteuerung des Aktuators mit mehreren diskreten Frequenzen vorgesehen sein. Bevorzugt sind die Frequenzen, mit denen Anregungen auf das elastische System einwirken. Diese Frequenzen können durch eine Fourieranalyse des Ausgangssignals des Schwingungssensors ermittelt werden.

Die Steuereinrichtung kann weiterhin auch zur Ansteuerung des Aktuators mit beliebigen Frequenzen vorgesehen sein. Dies ist insbesondere bei stochastischen Anregungen des elastischen Systems sinnvoll, die im Frequenzraum einem weißen Rauschen nahekommen.

Der Regelalgorithmus, mit dem die Steuereinrichtung den Aktuator in Abhängigkeit von den Schwingungen des elastischen Systems ansteuert, kann von der Steuereinrichtung adaptiv angepaßt werden, wenn unterschiedliche Schwingungen des elastischen Systems auftreten können. Bei sich immer wiederholenden Schwingungen, die mit Hilfe des Schwingungstilgers zu dämpfen sind, ist jedoch ein fester Regelalgorithmus zur Festlegung der Phasen und Amplituden bei der Ansteuerung des Aktuators ausreichend. In jedem Fall hat der Regelalgorithmus eine Minimierung des beobachteten Schwingungsniveaus des elastischen Systems zum Ziel.

Als Aktuatoren für die neue Vorrichtung kommen alle bekannten Aktuatoren, die mit einer Frequenz im interessierenden Frequenzbereich ansteuerbar sind, in Frage. Hierbei handelt es sich beispielsweise um magnetostriktive, aber vor allem um piezoelektrische Aktuatoren. Diese Aktuatoren können vom Stapeltyp sein, um ihre wirksame Längenänderungsmöglichkeit zu vergrößern. Die Steifigkeit der Aktuatoren sollte möglichst groß sein. Anderenfalls ist sie bei der Steifigkeit der Ankopplung der Masse des Schwingungstilgers an das elastische System zu berücksichtigen.

Grundsätzlich ist es möglich, den Aktuator zwischen einer die elastische Ankopplung der Masse bewirkenden Feder und der Masse selbst anzuordnen. Bevorzugt ist aber, wenn der Aktuator zwischen dem elastischen System und einer die elastische Ankopplung der Masse bewirkenden Feder angeordnet ist.

Die Erfindung wird im folgenden anhand von Ausführungsbeispielen näher erläutert und beschrieben. Dabei zeigt

Figur 1     eine Auftragung zur passiven Wirksamkeit eines Schwingungstilgers,

Figur 2     den prinzipiellen Aufbau der neuen Vorrichtung zur Dämpfung von Schwingungen,

Figur 3     eine Auftragung von zwei Übertragungsfunktionen zu einem konkreten Anwendungsbeispiel und

Figur 4     eine Auftragung zu einem Filter für die aktive Ansteuerung des Schwingungstilgers.

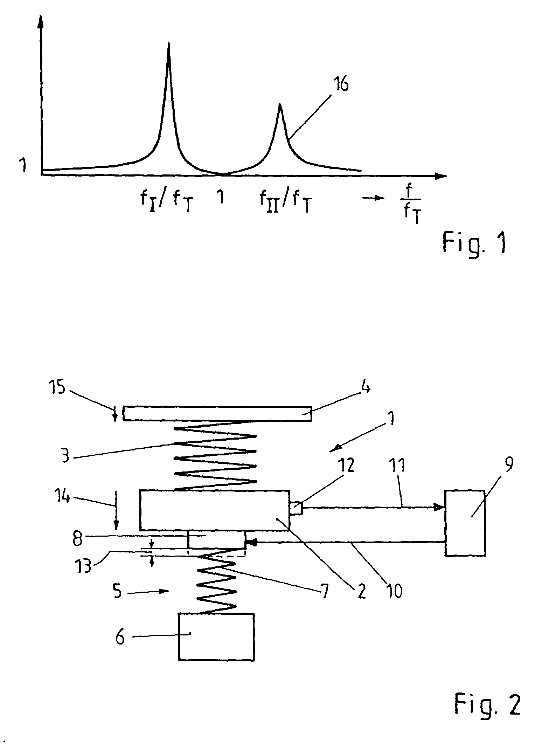

In Figur 1 ist die Übertragungsfunktion 16 $T_P = x_S / P$ einer Fußpunktanregung P auf die Verschiebung $x_S$ eines elastischen Systems mit einem Schwingungstilger über der Frequenz der Anregung aufgetragen. Dabei ist die Frequenz auf die Tilgereigenfrequenz $f_T$ des Schwingungstilgers normiert. Die Tilgereigenfrequenz $f_T$ ergibt sich gemäß $f_T = 1/2\,\pi\,\sqrt{C_T/m_T}$ aus der Steifigkeit $c_T$ der Ankopplung einer Masse $m_T$ des Schwingungstilgers an das elastische System. Bei $F/f_T = 1$ ist die Dämpfung des elastischen Systems durch den Schwingungstilger maximal beiderseits daneben bei $f_I/f_T$ und $f_{II}/f_T$ weist die Übertragungsfunktion 16 $T_P$ jedoch zwei Nebenmaxima auf.

Insbesondere um diese Nebenmaxima zu unterdrücken, ist die in Figur 2 dargestellte Vorrichtung zur Dämpfung von Schwingungen des elastischen Systems vorgesehen. Das elastische System 1 ist durch eine generalisierte Masse 2 $m_S$ und eine Feder 3 mit einer generalisierten Steifigkeit $c_S$, die die Masse 2 an eine Basis 4 ankoppelt, wiedergegeben. Der Schwingungstilger 5 weist die Masse 6 $m_T$ und eine Feder 7 mit der Steifigkeit $c_T$ auf. Über die Feder 7 ist die Masse 6 an die Masse 2 des elastischen Systems 1 angekoppelt. In Reihe mit der Feder 7, zwischen der Feder 7 und der Masse 2 ist ein in der Arbeitsrichtung des Schwingungstilgers 5 längenveränderlicher Aktuator 8 geschaltet. Mit dem Aktuator 8 ist der Schwingungstilger 5 anregbar, um dem elastischen System 1 Schwingungsenergie zu entziehen, d. h. um das elastische System 1 zu dämpfen. Zur Ansteuerung des Aktuators 8, der beispielsweise ein piezoelektrischer Aktuator vom Stapeltyp sein kann, ist eine Steuereinrichtung 9 vorgesehen. Die Steuereinrichtung 9 generiert ein Ansteuersignal 10 für den Aktuator 8 in Abhängigkeit von einem Ausgangssignal 11 eines Schwingungssensors 12 an der Masse 2 des elastischen Systems 1. Die durch das Ansteuersignal 10 bei dem Aktuator 8 bewirkte Längenänderung u 13 ist beispielsweise geeignet, um die in Figur 1 dargestellte Übertragungsfunktion 16 $T_P$ im Bereich des Nebenmaximums bei $f_l/f_T$ zu reduzieren. Hierzu reicht es aus, wenn der Schwingungssensor 12 registriert, daß das elastische System 1 eine Anregung mit der Frequenz $f_l/f_T$ erfährt. Die Steuereinrichtung 9 steuert dann den Aktuator 8 an, um die Anregungsenergie von dem elastischen System 1 an den Schwingungstilger 5 weiterzugeben, obwohl die Anregungsfrequenz $f_l/f_T$ nicht mit der Tilgereigenfrequenz zusammenfällt. Hierfür ist ein Energieaufwand zu betreiben, der maximal der Anregungsenergie der auf das elastische System 1 einwirkenden Anregung entspricht.

Die Ansteuerung des Aktuators 8 kann in gleicher Weise bei anderen Frequenzen erfolgen, um auch bei diesen eine wirksame Dämpfung des elastischen Systems 1 durch den Schwingungstilger 5 zu erreichen.

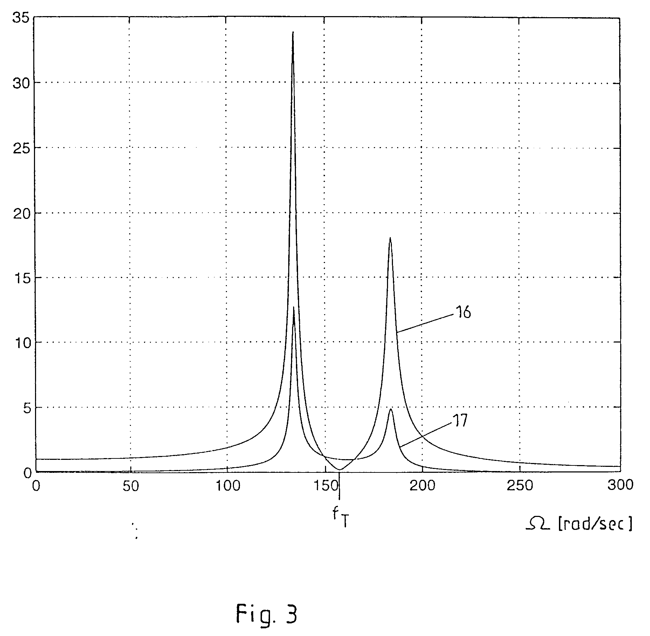

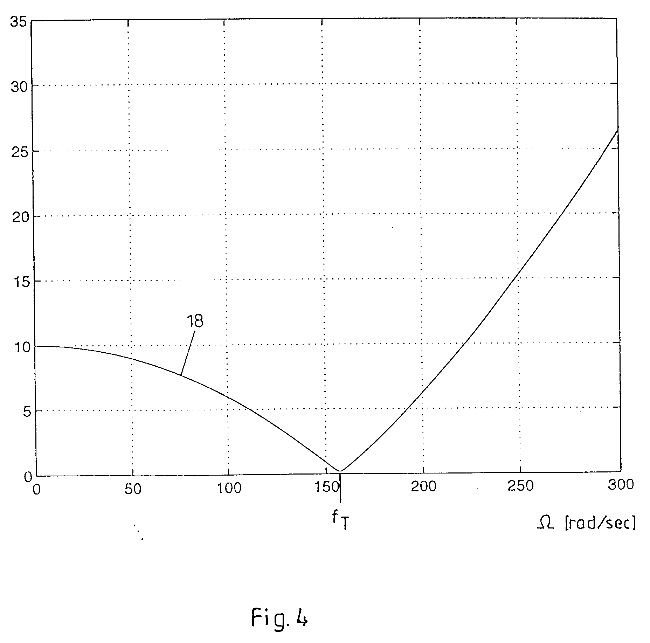

Im Folgenden wird ein Ausführungsbeispiel näher beschrieben, bei dem die generalisierte Masse 2 $m_S$ und die generalisierte Steifigkeit $c_S$ der Feder 3 gemäß Fig. 2 für die Parameter einer schwingungsfähigen Platte stehen. Dies könnte beispielsweise für eine rechteckige, an ihrem Rand fest eingespannte Platte sein. Bei der Grundschwingung dieser Platte befindet sich der Schwingungsbauch genau in der Plattenmitte. Hier wäre der Schwingungstilger 5 gemäß Fig. 2 unter Zwischenordnung des längenveränderlichen Aktuators 8 anzubringen. Typischerweise liegt die Amplitude bei einer solchen Plattenschwingung, d. h. die Verschiebung $x_S$ im 0,1 mm-Bereich. Ausgehend von einer Systemeigenfrequenz und einer Tilgereigenfrequenz $f_S$ = $f_T$ = 25 Hz, einer generalisierten Masse 2 von $m_S$ = 1 kg, einer generalisierten Masse 6 von $m_T = m_S/10 = 0,1$ kg, einer generalisierten Steifigkeit der Feder 3 von $c_S$ = 24674 N/m und einer generalisierten Steifigkeit der Feder 7 von $c_T$ = 2467,4 N/m gemäß Fig. 2 ergeben sich die in Fig. 3 über der Frequenz dargestellten Übertragungsfunktionen. Die Übertragungsfunktion 16 $t_P = x_S/P$ entspricht der bereits in Fig. 1 in einem anderen Maßstab dargestellten Übertragungsfunktion 16. Die Übertragungsfunktion 17 $T_u = x_S/u$ ist die Übertragungsfunktion der Längenänderung 13 u durch die Ansteuerung des längenveränderlichen Aktuators 8 auf die Verschiebung 14 $x_S$ der Masse 2. Aus dem Vergleich der beiden Übertragungsfunktionen 16 und 17 ergibt sich, daß der Wirkungsgrad einer Längenveränderung 13 u auf die Verschiebung 14 $x_S$ der Masse 2 geringer ist als derjenige der Fußpunktanregung 15 P. Dies gilt zumindest außerhalb der Tilgereigenfrequenz $f_T$. Dort ist überdies das Verhältnis der beiden Übertragungsfunktionen 16 und 17 nicht konstant. Hieraus folgt, daß zur vollständigen Schwingungsdämpfung der Masse 2 ein frequenzabhängiges Filter in der Steuereinrichtung 9 für die Ansteuerung des Aktuators 8 in Abhängigkeit von dem Signal des Schwingungssensors 12 verwendet werden muß. In Fig. 4 ist die Verstärkung 18 des Filters, die dem Quotienten aus der Übertragungsfunktion 16 $T_P$ und der Übertragungsfunktion 17 $T_U$ entspricht, über der Frequenz aufgetragen. Die Verstärkung 18 gibt in Abhängigkeit von der Frequenz an, auf das Wievielfache die von dem Schwingungssensor 12 gemessene Verschiebung $x_S$ von der Steuereinrichtung verstärkt werden muß, damit sich bei entsprechender gegenphasiger Längenänderung 13 u des Aktuators 8 eine vollständige Schwingungsdämpfung der Masse 2 durch die Ansteuerung des Aktuators 8 ergibt.

## BEZUGSZEICHENLISTE

| | |
|---|---|
| 1 - | elastisches System |
| 2 - | Masse |
| 3 - | Feder |
| 4 - | Basis |
| 5 - | Schwingungstilger |
| 6 - | Masse |
| 7 - | Feder |
| 8 - | Aktuator |
| 9 - | Steuereinrichtung |
| 10 - | Ansteuersignal |
| 11 - | Ausgangssignal |
| 12 - | Schwingungssensor |
| 13 - | Längenänderung u |
| 14 - | Verschiebung $x_S$ |
| 15 - | Fußpunktanregung P |
| 16 - | Übertragungsfunktion |
| 17 - | Übertragungsfunktion |
| 18 - | Verstärkung |

**Patentansprüche**

1. Verfahren zur Dämpfung von Schwingungen eines elastischen Systems mit einem Schwingungstilger,

   - wobei eine Masse (6) des Schwingungstilgers (5) unter Zwischenordnung eines ansteuerbaren und in einer Arbeitsrichtung des Schwingungstilgers (5) längenveränderlichen Aktuators (8) elastisch an das elastische System angekoppelt wird,

- wobei eine Tilgereigenfrequenz des Schwingungstilgers (5) unter Berücksichtigung einer Eigenfrequenz des elastischen Systems (1) festgelegt wird und

- wobei der Aktuator (8) zur Dämpfung von Schwingungen des elastischen Systems (1) aktiv angesteuert wird,

**dadurch gekennzeichnet,** daß die Tilgereigenfrequenz des Schwingungstilgers (5) auf die Eigenfrequenz des elastischen Systems (1) abgestimmt wird und daß durch die aktive Ansteuerung des Aktuators (8) der Bereich der passiven Schwingungsdämpfung durch den Aktuator (8) verbreitert wird.

2. Verfahren nach Anspruch 1, **dadurch gekennzeichnet,** daß Schwingungen des elastischen Systems gemessen werden und daß der Aktuator in Abhängigkeit von den aktuell gemessenen Schwingungen des elastischen Systems angesteuert wird.

3. Verfahren nach Anspruch 2, **dadurch gekennzeichnet,** daß der Aktuator (8) mit einer oder mehreren diskreten Frequenzen angesteuert wird.

4. Verfahren nach Anspruch 3, **dadurch gekennzeichnet,** daß eine Fourieranalyse der gemessenen Schwingungen des elastischen Systems durchgeführt wird.

5. Verfahren nach einem der Ansprüche 1 bis 4, **dadurch gekennzeichnet,** daß der Aktuator (8) zwischen dem elastischen System (1) und einer die elastische Ankopplung der Masse (6) bewirkenden Feder (7) angeordnet wird.

6. Vorrichtung zur Dämpfung von Schwingungen eines elastischen Systems, mit einem Schwingungstilger (5), der eine Masse (6) aufweist, die ihrerseits über einen ansteuerbaren und in einer Arbeitsrichtung des Schwingungstilgers (5) längenveränderlichen Aktuator (8) elastisch an das elastische System (1) angekoppelt ist, wobei eine Tilgereigenfrequenz des Schwingungstilgers (5) unter Berücksichtigung einer Eigenfrequenz des elastischen Systems (1) festgelegt ist und wobei eine Steuereinrichtung (9) zur Ansteuerung des Aktuators (8) vorgesehen ist, **dadurch gekennzeichnet,** daß die Tilgereigenfrequenz des Schwingungstilgers (5) mit einer Eigenfrequenz des elastischen Systems (1) zusammenfällt.

7. Vorrichtung nach Anspruch 6, **dadurch gekennzeichnet,** daß an dem elastischen System (1) ein Schwingungssensor (12) angeordnet ist, dessen Ausgangssignal (11) ein Eingangssignal der Steuereinrichtung (9) bildet.

8. Vorrichtung nach Anspruch 7, **dadurch gekennzeichnet,** daß die Steuereinrichtung (9) zur Ansteuerung des Aktuators (8) mit einer oder mehreren diskreten Frequenzen vorgesehen ist.

9. Vorrichtung nach Anspruch 8, **dadurch gekennzeichnet,** daß die Steuereinrichtung (9) zur Ansteuerung des Aktuators (8) mit beliebigen Frequenzen vorgesehen ist.

10. Vorrichtung nach einem der Ansprüche 6 bis 9, **dadurch gekennzeichnet,** daß der Aktuator (8) zwischen dem elastischen System (1) und einer die elastische Ankopplung der Masse (6) bewirkenden Feder (7) angeordnet ist.

Fig. 1

Fig. 2

Fig. 3

Fig. 4